# EUROPEAN PATENT SPECIFICATION

(11) **EP 0 777 997 B1**
(45) Date of publication and mention of the grant of the patent: **18.07.2001**
(21) Application number: 96870152.4
(22) Date of filing: 26.11.1996
(51) Int. Cl.: A47L 13/20

(54) **Method for making disposable wipe-out device**
Verfahren zum Herstellen einer Wegwerfwischeinrichtung
Procédé pour la fabrication d'un dispositif d'essuyage jetable

(30) Priority: 01.12.1995 JP 31431095
(43) Date of publication of application: 11.06.1997
(73) Proprietor: UNI-CHARM CORPORATION, Kawanoe-shi Ehime-ken (JP)
(72) Inventor: Kenmochi, Yasuhiko, Kanonji-shi, Kagawa-ken (JP); Ishikawa, Hiroki, Kanonji-shi, Kagawa-ken (JP); Bando, Takeshi, Kawanoe-shi, Ehime-ken (JP)
(74) Representative: Van Malderen, Michel

(56) References cited:
- WO-A-92/03083
- DE-U- 8 901 641
- US-A- 3 962 743

## Description

The present invention relates to a method for making a disposable wipe-out device suitable to be directly used as a floorcloth or an attachment to a separate device such as a mop stick in order to wipe out dust and dirt particularly from a floor.

There have been well known wipe-out devices comprising a basic sheet and a plurality of brushy pieces made of nonwoven fabric or plastic film hanging down from one surface of the basic sheet so that free ends of the brushy pieces may serve for desired function of a wiping-out and the basic sheet may be detachably attached to a separate device such as a mop stick or holder in its actual use.

However, such known wipe-out devices are inconvenient in that an increase in the number of the hanging brushy pieces, i.e., in the density at which these brushy pieces are planted on a unit area of the basic sheet will correspondingly narrow spaces between brushy pieces and consequently make the operation of planting them difficult. This inconvenience may cause, in contradiction to the original intention, an increase in the manufacturing cost for disposable devices which should be inexpensive.

Document US-A-3962743 describes a method of making a wiping device. The wiping device comprises a rectangular support member, onto which a row of looped yarns is stitched, which extend from both longitudinal edges of the support member, so as to acquire a device suitable for the gathering of dust on floors or walls. The device described in said document has only a limited number of strands hanging downward from the support member. To increase the density of said strands, a multiple number of rows of yarns has to be stitched to the support member, leading to a repetitive action and therefore a time consuming and expensive fabrication process.

Document DE-A-8901641 describes a wiping device comprising a carrier, onto which a number of brushy parts are attached. The document does not, however, refer to a method of fabricating said wiping device.

Document WO-A-9203083 describes a similar wiping device. This document refers to an improved way of fixing the wiping device to a holder, not to any fabrication process.

Document US-A-528730 describes a brush, comprising fibres which are attached to a back carrier, e.g. of rectangular shape. Said fibres are arranged, in parallel relation, preferably the full width of the brush. Said fibres are then looped and secured to the back by stitching. The loops are subsequently cut through forming tufts or bristles. A problem of this method is that it is time-consuming due to the repetitive looping and stitching of the fibres to the carrier.

In view of the problems as described above, it is a principal object of the invention to make a disposable wipe-out device including brushy pieces planted at a relatively high density without being accompanied with a corresponding increase of the manufacturing cost.

The object set forth above is achieved, according to the invention, by a method of making a disposable wipe-out device comprising a basic sheet and a plurality of brushy pieces hanging down from at least one surface of the basic sheet, the method comprising the steps of:
a. continuously feeding a first web for the basic sheet comprising heat-sealable material;
b. continuously feeding a second web comprising heat-sealable continuous filaments in a longitudinal direction thereof onto the first web;
c. providing the first web and the second web with heat-seal lines extending transversely of them and intermittently arranged longitudinally of them so as to obtain a continuous composite third web integrally consisting of the first web and the second web;
d. cutting the second web transversely thereof along a middle line extending parallel to and between each pair of adjacent the heat-seal lines so that a length of the second web corresponding to a half of the length between each pair of adjacent cutting lines define the brushy pieces; and
e. cutting the first web into a desired length to obtain the individual basic sheets.

Fig. 1 is a perspective view showing a holder equipped with a wipe-out device of the invention;
Fig. 2 is a perspective view showing the wipe-out device; and
Fig.3 is a diagram illustrating a process of making the wipe-out device.

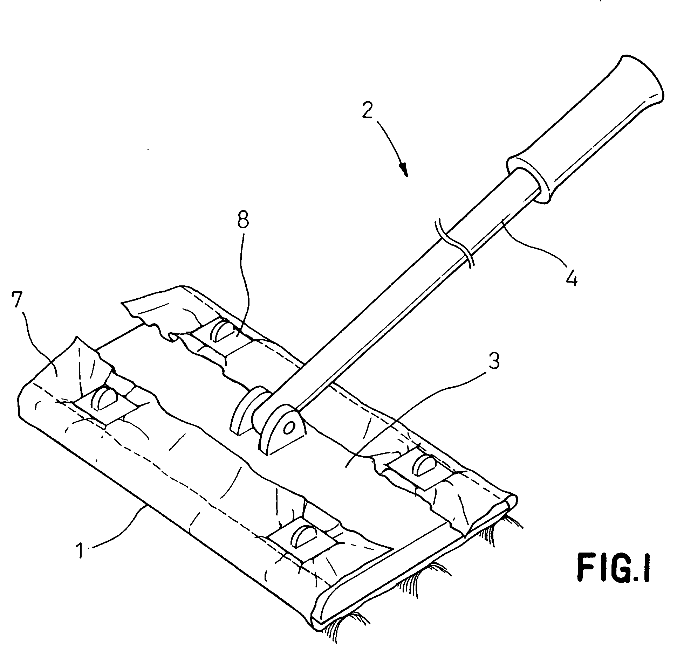

Fig. 1 is a perspective view showing a holder 2 utilizing a disposable wipe-out device 1. The holder 2 comprises a mount plate 3 for the wipe-out device 1 and a stick 4. A marginal region 7 of the wipe-out device 1 covering a lower surface of the mount plate 3 is folded back onto an upper surface of the mount plate 3 and fastened thereto by clips 8 provided on the mount plate 3. The holder 2 is used with the stick 4 held by the user' hand so that the device 1 may gently rub a floor or wall.

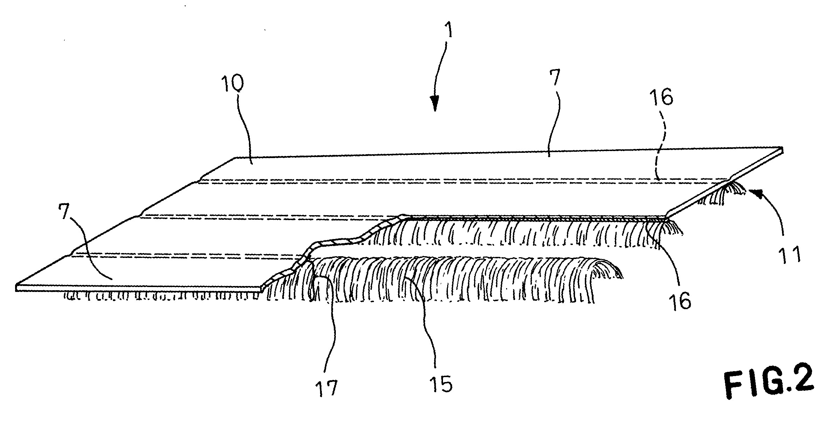

The device 1 shown by Fig. 2 in a perspective view comprises a basic sheet 10 formed by film or nonwoven fabric made of thermoplastic synthetic resin and a plurality of brushy pieces 11 hanging from one surface of the basic sheet 10 and used to wipe out dust and dirt from the floor or the wall. It should be understood that the marginal region 7 is shown by Fig.1 in its folded back state but it is shown by Fig. 2 in its unfolded state. Each brushy pieces 11 comprises a desired length of thermoplastic synthetic resin continuous filament 15 having its anchoring portion 16 heat-sealed to the basic sheet 10 and its remainder hanging down from the basic sheet 10 so as to form a pair of wipe-out elements 17.

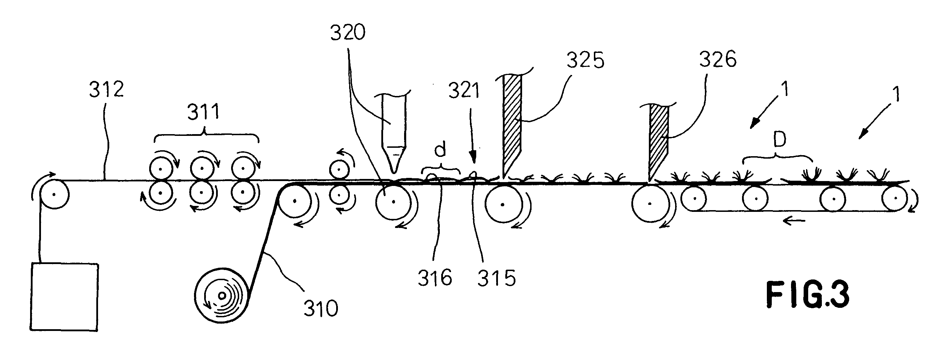

Fig. 3 is a diagram illustrating a process of making the device 1. During this process, a continuous first web 310 made of polypropylene having a width of 210mm and a basis weight of 30g/m² is continuously fed from left to right as viewed in the diagram. Simultaneously, a tow 312 comprising a bundle of 2,000 - 100,000 polyester continuous filaments 315 each of 2 - 30 deniers is continuously fed from left to right as viewed in the diagram. The tow 312 is opened or fibrillated by a set of expanding rolls 311 to form a continuous second web having a desired width and thereafter placed upon the first web 310. The first web 310 and the second web 312 are transported to a heating emboss machine 320 in which they are compressed together under heating and integrally heat-sealed along thereby formed heat-seal lines 316 transversely extending to form a continuous composite third web 321. The heat-seal lines 316 are provided so as to be spaced apart one from another by a distance d as measured longitudinally of the third web, i.e., intermittently arranged longitudinally of the third web 321. Thereafter, the second web 312 is cut by a first cutter 325 along a middle line extending parallel to and between each pair of adjacent heat-seal lines 316 in two. Then, the first web 310 is cut by a second cutter 326 into a desired length. In this manner, the individual wipe-out devices 1 are obtained from the third web 321. In this process, the individual basic sheets 10 are obtained from the first web 310, the brushy pieces 11 are obtained from the second web 312, the individual filaments 15 of the brushy pieces 11 are obtained from the continuous filaments 315 and the anchoring portions 16 are provided by the heat-seal lines 316. Preferably, each of the heat-seal lines 316 has a width of 2 - 10mm and is spaced apart from the adjacent heat-seal line by a distance d of 20 - 200mm. The brushy pieces 11 or the second web or the tow 312 prior to formation of these brushy pieces 11 may be immersed with surfactant or the other agent at an appropriate step of the process. In a section of the first web 310 to be cut by the second cutter 326, a distance D between each pair of adjacent heat-seal lines 316 may be dimensioned to be longer than the distance d to obtain a relatively large marginal region 7 facilitating the wipe-out device 1 to be mounted on the holder 2. In this case, the section defined between two adjacent heat-seal lines spaced from each other by the distance D necessarily provides relatively long brushy pieces 11 and these brushy pieces 11 must be cut to a length in conformity of the remainder brushy pieces 11. According to the process illustrated, a length of each filament 15 hanging down from the anchoring portion 16 corresponds to 1/2 of the distance d. If desired, a length of the second web 312 fed on the section of the first web 310 defined between each pair of adjacent heat-seal lines 316 may be dimensioned to be longer than the distance d in order to obtain the filaments 15 longer than 1/2 of the distance d.

For the method according to the invention, particular types of materials used as the basic sheet 10 and the brushy pieces 11 are not critical so far as they are mutually heat-sealable. However, it is generally preferable to use thermoplastic synthetic resin as the materials for these components. Additionally, the first web 310 and the second web 312 made of thermoplastic synthetic resin may be mixed with non-heat-sealable filaments such as rayon unless they exceed 20% by weight. Such non-heat-sealable filaments will be embedded in the material heat-sealed along the respective heat-seal lines 316 and fixed thereto. Furthermore, continuous plastic film may be employed for nonwoven fabric as the first web 310.

The inventive method for making the wipe-out device allows the density of the brushy pieces planted on the basic sheet to be easily improved merely by increasing the number of filaments constituting the tow or web, since the tow or web comprising the heat-sealable filaments and the basic sheet of the heat-sealable nature are heat-sealed together followed by transversely cutting the tow or web to form the brushy pieces of said wipe-out device.

## Claims

1. A method for making a disposable wipe-out device (1) comprising a basic sheet (10) and a plurality of brushy pieces (11) hanging from at least one surface of the basic sheet (10), characterised in that said method is comprising the steps of :
a. continuously feeding a first web (310) for the basic sheet comprising heat-sealable material;
b. continuously feeding a second web (312) comprising heat-sealable continuous filaments (315) in a longitudinal direction thereof onto the first web (310);
c. providing the first web (310) and the second web (312) with heat-seal lines (316) extending transversely of them and intermittently arranged longitudinally of them so as to obtain a continuous composite third web (321) integrally consisting of the first web (310) and second web (312).
d. cutting the second web (312) transversally thereof along a middle line extending parallel to and between each pair of adjacent the heat-seal lines (316) so that a length of the second web corresponding to a half of the length between each pair of adjacent cutting lines defines the brushy pieces (11); and
e. cutting the composite third web (321) into a desired length to obtain the individual basic sheets .

2. The method according to Claim 1, wherein the step of continuously feeding the second web includes a step of opening a tow (312) comprising the continuous filaments (315) to a desired width.

3. The method according to Claim 2, wherein the tow (312) comprises a bundle of 2000 - 100000 continuous filaments (315) each of 2 - 30 deniers.

4. The method according to Claim 1, wherein the first web (310) comprises a non-woven fabric or plastic film.

5. The method according to Claim 1, wherein each of the heat-seal lines (316) has a width of 2 - 10mm and is spaced apart from the adjacent heat-seal line by a distance of 20 - 200 mm.

## Patentansprüche

1. Verfahren für die Herstellung einer Wegwerfwischeinrichtung (1) aus einer Grundplatte (10) und einer Vielzahl von Bürstenelementen (11), die von mindestens einer Fläche der Grundplatte (10) herunter hängen, dadurch gekennzeichnet, dass das Verfahren die nachfolgenden Schritte enthält :
a. ein kontinuierliches Zuführen einer ersten Bahn (310) für die Grundplatte, die ein heißsiegelfähiges Material enthält.
b. ein kontinuierliches Zuführen einer zweiten Bahn (312), die heißsiegelfähige kontinuierliche Fäden (315) in einer längsverlaufenden Richtung derselben aufweist, auf die erste Bahn (310);
c. die erste Bahn (310) und die zweite Bahn (312) ausstatten mit heißsiegelfähigen Zeilen (316), die sich quer zu denselben erstrecken und in der Längsrichtung gesehen intermittierend zu denselben angeordnet sind, um eine kontinuierliche dritte Schichtbahn (321) zu erlangen, welche integral aus der ersten Bahn (310) und der zweiten Bahn (312) besteht.
d. Schneiden der zweiten Bahn (312) quer zu derselben entlang einer Mittellinie, die sich parallel zu und zwischen einem jeden Paar von benachbarten Heißsiegelzeilen (316) so erstreckt, dass eine Länge der zweiten Bahn, die einer Hälfte der Länge zwischen einem jeden Paar von benachbarten Zeilen entspricht, die Bürstenelemente (11) definiert; und
e. Schneiden der dritten Schichtbahn (321) auf die gewünschte Länge, um die individuellen Grundplatten zu erhalten.

2. Verfahren gemäß Patentanspruch 1, bei welchem der Schritt des kontinuierlichen Zuführens der zweiten Bahn einen Schritt beinhaltet zum Öffnen eines die kontinuierlichen Fäden (315) enthaltenden Stranges (312) auf eine gewünschte Breite.

3. Verfahren gemäß Patentanspruch 2, bei welchem der Strang (312) ein Bündel mit 2000 - 100000 kontinuierlichen Fäden (315), ein jeder von 2 - 30 Denier, ausmacht.

4. Verfahren gemäß Patentanspruch 1, bei welchem die erste Bahn (310) aus einem Vliesstoff oder einem Kunststofffilm besteht.

5. Verfahren gemäß Patentanspruch 1, bei welchem eine jede der Heißsiegelzeilen (316) eine Breite von 2 x 10 mm aufweist und um eine Entfernung von 20 - 200 mm von der nächsten Heißsiegelzeile entfernt ist.

## Revendications

1. Procédé pour la fabrication d'un dispositif de nettoyage jetable (1) comprenant une feuille de base (10) et une pluralité d'éléments de brossage (11) accrochés à au moins une surface de la feuille de base (10), caractérisé en ce que ledit procédé comprend les étapes consistant à:
a. alimenter en continu une première bande (310) pour la feuille de base constituée en un matériau thermosoudable;
b. alimenter en continu une deuxième bande (312) comprenant des filaments continus thermosoudables (315) dans une direction longitudinale de celle-ci sur la première bande (310);
c. munir la première bande (310) et la deuxième bande (312) de lignes de thermosoudage (316) s'étendant transversalement à celles-ci et prévues à intervalles longitudinalement à celles-ci de manière à obtenir une troisième bande composite continue (321) intégrant la première bande (310) et la deuxième bande (312).
d. couper la deuxième bande (312) transversalement à celle-ci le long d'une ligne centrale s'étendant parallèlement à et entre chaque paire de lignes de thermosoudage adjacentes (316) de telle sorte que la longueur de la deuxième bande correspondant à la moitié de la longueur entre chaque paire de lignes de coupe adjacentes définisse les éléments de brossage (11); et
e. couper la troisième bande composite (321) à une longueur désirée pour obtenir des feuilles de base individuelles.

2. Procédé suivant la revendication 1, dans lequel l'étape consistant à alimenter en continu la deuxième bande inclut une étape consistant à ouvrir un écheveau (312) comprenant les filaments continus (315) à une largeur désirée.

3. Procédé suivant la revendication 2, dans lequel l'écheveau (312) comprend un faisceau de 2000-100000 filaments continus (315) chacun de 2-30 deniers.

4. Procédé suivant la revendication 1, dans lequel la première bande (310) est constituée en un tissu non tissé ou en un film en matière plastique.

5. Procédé suivant la revendication 1, dans lequel chacune des lignes de thermosoudage (316) a une largeur de 2-10 mm et est espacée de la ligne de thermosoudage adjacente d'une distance de 20-200 mm.
